# EUROPÄISCHE PATENTSCHRIFT

(11) **EP 1 785 621 B1**
(45) Veröffentlichungstag und Bekanntmachung des Hinweises auf die Patenterteilung: **01.01.2014**
(21) Anmeldenummer: 06021603.3
(22) Anmeldetag: 16.10.2006
(51) Int. Cl.: F03D 1/06

(54) **Rotorblatt für eine Windenergieanlage**
Blade for a wind turbine
Pale d'éolienne

(30) Priorität: 14.11.2005 DE 102005054594
(43) Veröffentlichungstag der Anmeldung: 16.05.2007
(73) Patentinhaber: Daubner & Stommel GbR Bau-Werk-Planung, 27777 Ganderkesee (DE)
(72) Erfinder: Stommel, Matthias, 27777 Ganderkesee (DE)
(74) Vertreter: Aulich, Martin

(56) Entgegenhaltungen:
- DE-A1- 10 152 449
- DE-A1- 10 233 102
- DE-A1- 10 337 708
- DE-A1- 19 528 862
- DE-C1- 19 719 221

## Beschreibung

Die vorliegende Erfindung betrifft ein Rotorblatt für eine Windenergieanlage, wobei das Rotorblatt zumindest einen Hohlraum aufweist. Des Weiteren betrifft die Erfindung ein Verfahren zum Betreiben einer Windenergieanlage mit einem von Wind antreibbaren Rotor mit zumindest einem Rotorblatt der vorgenannten Art, mit einem Generator zur Umwandlung der mechanischen Energie des Rotors in elektrische Energie sowie mit einem Turm, an dem der Rotor angeordnet ist.

Rotorblätter für Windenergieanlagen sind großen Belastungen ausgesetzt. Im Laufe einer angenommenen Betriebsdauer von beispielsweise zwanzig Jahren drehen sich die Rotorblätter mindestens 300 bis 500 Millionen mal. Dabei kommt es insbesondere zu häufigen Biegewechselbelastungen, die sich äußerst negativ auf die Lebensdauer des einzelnen Rotorblattes auswirken. Üblicherweise bestehen Rotorblätter aus einer Ober-und einer Unterschale, wobei die Schalen durch Querstege verbunden sind, die dem Rotorblatt eine ausreichende Biegesteifheit verleihen. Insbesondere die Stege sowie die Verbindungen der Stege mit der Ober- bzw. der Unterschale - häufig Klebverbindungen - werden im Betrieb abwechselnd auf Druck und auf Zug belastet.

Die Druckschrift DE 101 52 449 offenbart ein Rotorblatt, dessen Oberfläche veränderbar ist. Dazu ist ein abhängig vom Winddruck mit Luft füllbarer, separater Behälter aus verformbaren Material vorgesehen. Wechsellasten, wie sie während des Betriebs der Anlage beispielsweise bei den Turmdurchgängen des Rotorblattes entstehen, werden so nicht vermieden.

Die DE 195 28 862 A1 zeigt, Hohlräume eines Rotorblattes mit Gas zu beaufschlagen, nämlich mit warmer Luft. Dieses Gas dient dazu, bedarfsweise eine Enteisung des Rotorblattes zu erreichen. Wechsellasten wird nicht entgegengewirkt.

Ausgehend von diesem Stand der Technik ist es Aufgabe der vorliegenden Erfindung, ein Rotorblatt der eingangs genannten Art für eine Windenergieanlage anzugeben, bei dem Wechsellasten gegenüber den im Stand der Technik eingesetzten Rotorblättern verringert oder möglichst verhindert werden. Des Weiteren ist es Aufgabe der vorliegenden Erfindung, ein Verfahren zum Betreiben einer Windenergieanlage der eingangs genannten Art anzugeben, bei der ein derartiges Rotorblatt eingesetzt wird.

Diese Aufgabe wird gelöst durch die Merkmale des Anspruches 1.

Ein erfindungsgemäßes Rotorblatt für eine Windenergieanlage weist dabei zumindest einen Hohlraum auf, der gasdicht abgeschlossen ist und zur Vorspannung des Rotorblattes mit Gas, insbesondere Luft, gefüllt ist, wobei der Druck des Gases größer oder geringer sein soll als der an dem Aufstellort der Windenenergieanlage, d.h. dem Einsatzort des Rotorblattes, gewöhnlich zu erwartende, durchschnittliche Luftdruck. Im Rahmen dieser Anmeldung umfasst der Begriff Gas ausdrücklich Gasgemische.

Durch den Überdruck beziehungsweise den Unterdruck, der in dem Hohlraum bzw. innerhalb des Rotorblatts herrscht, wird eine Vorspannung des Rotorblatts mit entsprechenden nach Innen oder Außen wirkenden Kräften erzielt, das heißt, Betriebslasten werden möglichst überdrückt oder überzogen, so dass es im Betrieb nicht mehr oder nur noch zu geringen Wechsellasten kommt. Der Wert des Über- oder Unterdruckes, der bevorzugt eingestellt wird, ist dabei naturgemäß abhängig von verschiedenen Einflussfaktoren, wie etwa den eingesetzten Materialien des Rotorblattes, den Dimensionen desselben und dergleichen. Was den Hohlraum betrifft, so ist wichtig, dass er so ausgebildet und innerhalb des Rotorblattes angeordnet ist, dass eine Vorspannung zumindest einzelner, insbesondere einer Wechsellast unterworfener Bauteile des Rotorblattes erreicht wird.

In einer bevorzugten Ausführungsform ist das gesamte Rotorblatt in üblicher Weise als Hohlkörper ausgebildet mit Ober- und Unterschale, wobei vorzugsweise insbesondere ein nach außen durch die Ober- und Unterschale begrenzter, zusammenhängender Hohlraum gebildet ist. Die Wandungen des Hohlraums können demnach unmittelbar durch die Ober- und Unterschale gebildet werden. Innerhalb dieses Hohlraumes können Querstege vorhanden sind, die die Unter- und Oberschale miteinander verbinden. Wie der Fachmann des Standes der Technik erkennt, ist eine Vielzahl von anderen Ausführungsformen denkbar, bei denen ein oder mehrere erfindungsgemäße, gasdichte sowie gasgefüllte Hohlräume gebildet wird.

Sollte der an dem Einsatzort des Rotorblattes zu erwartende Luftdruck je nach Wetterlage stark unterschiedlich sein, so wird der Wert des Drucks des im Hohlraum befindlichen Gases vorzugsweise so gewählt, dass er zumindest außerhalb des Werteintervalls liegt, das durch niedrigsten zu erwartenden Luftdruckwert und den höchsten zu erwartenden Luftdruckwert vorgegeben ist. Entscheidend ist, sicherzustellen, dass am Einsatzort eine Vorspannung des Rotorblattes vorliegt, entweder durch innerhalb des Hohlraums vorherrschenden Über- oder Unterdruck.

Vorteilhafterweise kann der Hohlraum des Rotorblattes bereits bei der Herstellung desselben mittels einer Druckquelle, insbesondere einem Kompressor, oder einer Unterdruckquelle, insbesondere einer Pumpe, mit einem entsprechenden, unter Überdruck bzw. unter Unterdruck stehendem Gas beaufschlagt werden. Zweckmäßigerweise kommt hierfür Luft in Betracht. Es kann allerdings auch vorgesehen sein, inerte Gase einzusetzen, um zusätzlich beispielsweise innenseitigen Korrosionsvorgängen an dem Rotorblatt vorzubeugen.

In einer bevorzugten Ausführungsform der vorliegenden Erfindung sind in einer oder mehreren den Hohlraum begrenzenden Wandungen eine oder mehrere Ein- und/oder Auslassöffnungen angeordnet, über die das Gas von außen in den Hohlraum einleitbar ist und/oder über die das Gas aus dem Hohlraum nach außen leitbar ist. In einer einfachen Ausführungsform ist nur eine Öffnung vorhanden, die sowohl als Ein- als auch als Auslass dienen kann. Zweckmäßig ist es allerdings, mindestens zwei Öffnungen vorzusehen, nämlich jeweils getrennte Ein- und Auslassöffnungen.

Mit derartigen Ein- und/oder Auslassöffnungen kann der Hohlraum des Rotorblatts im Betrieb, das heißt, wenn das Rotorblatt an einem Rotor einer Windenergieanlage angeordnet ist, mit - insbesondere zusätzlichem - Gas befüllt werden oder es kann Gas ausgelassen werden, um den Druck in dem Hohlraum zu erhöhen bzw. zu emiedrigen. Zweckmäßigerweise weist dazu das Rotorblatt Ventile auf, über die der Einlass- und/oder Auslass des Gases in oder aus dem Hohlraum steuerbar ist. Grundsätzlich können die Ventile auch außerhalb des Rotorblattes angeordnet sein, beispielsweise innerhalb der Gondel und/oder an der Druckquelle bzw. der Unterdruckquelle. Entsprechende Zu- und/oder Ableitungen können zu den Ein- und/oder Auslassöffnungen des Rotorblattes hinführen.

Gemäß einem eigenständigen Aspekt der vorliegenden Erfindung entsprechend Patentanspruch 12 wird ein Verfahren zum Betreiben einer Windenergieanlage mit einem Rotorblatt der oben beschriebenen Art angegeben, bei dem der Ist-Druck und/oder die Ist-Feuchtigkeit und/oder die Ist-Temperatur des in dem Hohlraum des Rotorblattes befindlichen Gases gemessen wird, wobei abhängig von dem Ist-Druck und/oder der Ist-Feuchtigkeit und/oder der Ist-Temperatur der Druck innerhalb des Hohlraums erhöht oder erniedrigt wird und/oder das Gas innerhalb des Hohlraumes zumindest teilweise, vorzugsweise vollständig ausgetauscht wird. Damit wird gewährleistet, dass äußere Temperaturschwankungen in der Umgebung der Windenergieanlage, die zu Druckschwankungen innerhalb des Rotorblatthohlraumes führen, ausgeglichen werden können. Zusätzlich kann eventuell innerhalb des Hohlraumes entstehende Feuchtigkeit nach außen transportiert werden, indem das Gas, sollte die Feuchtigkeit einen bestimmten Wert übersteigen, durch neues Gas geringerer Feuchtigkeit ausgetauscht wird.

Eine Windenergieanlage, die gemäß diesem Verfahren arbeitet, weist eine Regelungseinrichtung auf, die die Druckquelle und/oder die Unterdruckquelle abhängig von den entsprechenden Ist-Werten des Gases innerhalb des Hohlraumes regelt. Die Druckquelle und/oder die Unterdruckquelle ist dabei in einer bevorzugten Ausführungsform außerhalb des Rotorblattes angeordnet, beispielsweise innerhalb des Turms der Windenergieanlage oder innerhalb der Gondel.

Zur Messung der vorgenannten Ist-Werte des Gases innerhalb des Hohlraumes weist das Rotorblatt einen Drucksensor und/oder einen Feuchtigkeitssensor und/oder einen Temperatursensor auf. Zweckmäßigerweise sind diese Sensoren innerhalb des Hohlraumes angeordnet. Zumindest stehen sie aber in kommunizierender Verbindung mit dem Hohlraum.

Weitere Merkmale der vorliegenden Erfindung ergeben sich aus den beigefügten Ansprüchen, der nachfolgenden Beschreibung eines bevorzugten Ausführungsbeispiels sowie aus den beigefügten Zeichnungen. Darin zeigen:
- Fig. 1: eine Seitenansicht der Windenergieanlage mit erfindungsgemäßem Rotorblatt,
- Fig. 2: einen Querschnitt durch ein erfindungsgemäßes Rotorblatt, das mit einem unter Unterdruck stehenden Gas befüllt ist,
- Fig. 3: einen Querschnitt eines erfindungsgemäßen Rotorblattes, das mit unter einem Überdruck stehenden Gas befüllt ist.

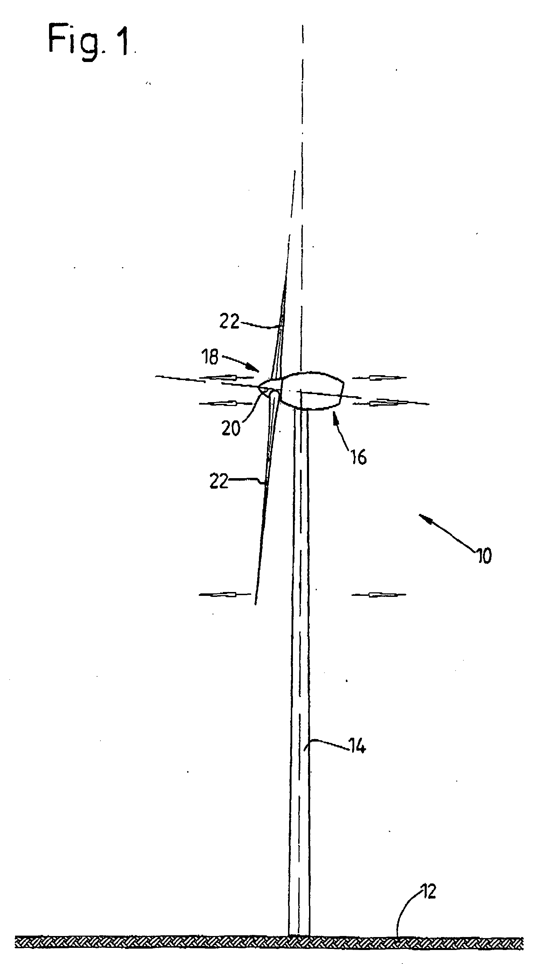

In der Fig. 1 ist eine Windenergieanlage 10 dargestellt, die am oberen Ende eines vertikalen, auf einem horizontalen Untergrund 12 angeordneten Turms 14 eine auf der Turmoberseite angeordnete Gondel 16 aufweist. Wie der Fachmann des Standes der Technik weiß, sind für die genaue Ausbildung eines Turms einer Windenergieanlage vielfältige Ausführungsformen denkbar. Die Erfindung ist naturgemäß nicht auf die in der Zeichnung beschriebene, kegelstumpfförmige Form des Turms 14 beschränkt.

An einem windzugewandten Ende der Gondel 16 ist ein Rotor 18 angeordnet, der eine Nabe 20 aufweist. Mit der Nabe 20 verbunden sind drei Rotorblätter 22, wobei die Rotorblattwurzeln der Rotorblätter 22 in entsprechende Öffnungen der Nabe 20 eingesteckt und in bekannter Weise mit dieser verbunden sind.

Der Rotor 18 dreht sich um eine leicht gegenüber der Horizontalen nach oben geneigte Achse. Sobald Wind auf die Rotorblätter 22 trifft, wird der Rotor 18 mitsamt Rotorblättern 22 um die Rotorachse in Rotation versetzt. Die Bewegung der Rotorachse wird von einem innerhalb der Gondel angeordneten Generator in elektrischen Strom umgewandelt. Die Rotorblätter 22 überstreichen während der Rotation eine Kreisfläche. Über eine nicht dargestellte, allerdings den Fachleuten des Standes der Technik bekannte, Verstelleinrichtung können die Rotorblätter 22 einzeln in ihrer Stellung zum Wind verändert werden, das heißt, der Anstellwinkel der Rotorblätter 22 zum Wind ist einstellbar.

Der grundsätzliche Aufbau der Windenergieanlage 10 mit zumindest annähernd horizontaler Rotorachse ist im Stand der Technik bekannt, so dass auf eine detaillierte Darstellung derselben verzichtet wird.

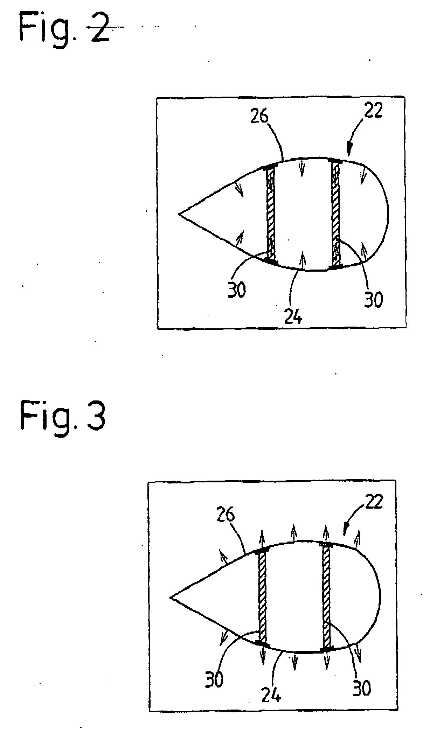

Jedes Rotorblatt 22 besteht aus einer insbesondere in den Fig. 2 und 3 zu erkennenden Unterschale 24 sowie einer Oberschale 26, die in Längsrichtung des Rotorblattes 22 miteinander verbunden sind. Die Materialien der Unterschale 24 und der Oberschale 26 sowie die Verbindungen derselben sind derart ausgebildet, dass der im Inneren des Rotorblattes 22, das heißt, der von der Unterschale 24 und der Oberschale 26 umschlossene Hohlraum 28, gasdicht, insbesondere luftdicht von der Umgebungsluft abgeschlossen ist.

Die Rotorblätter 22, also die jeweiligen Hohlräume 28, sind mit einem Gas, nämlich Luft befüllt. Dabei kann im jeweiligen Hohlraum 18 grundsätzlich entweder Unterdruck herrschen oder Überdruck, um den erfindungsgemäßen Erfolg zu bewirken:

Im Rotorblatt 22 der Figur 2 herrscht im Vergleich zu dem mittleren Luftdruck am Einsatzort der Windenergieanlage 10 ein Unterdruck, so dass sich aufgrund des außen herrschenden, größeren Luftdruckes Kräfte in Richtung des Inneren des Rotorblattes 22 ergeben, wie dies durch die nach innen gerichteten Pfeile angedeutet ist. Es wird eine Vorspannung des Rotorblattes 22 erzeugt. Die dargestellten Kräfte führen insbesondere auch zu definierten Druckbelastungen von im Inneren angeordneten, die Unterschale 24 und die Oberschale 26 verbindenden Stegen 30. Die definierte Druckbelastung ist durch die Einstellung des Unterdruckes so gewählt, dass die Druckkräfte insbesondere auf die Stege 30 größer sind als im Betrieb der Windenergieanlage 10 auftretende, durch äußere Einflüsse auf die Stege 30 einwirkende Zugkräfte. Dadurch werden die im Betrieb auftretenden Zugkräfte aufgehoben bzw. sogar überkompensiert, d.h. überdrückt. Insgesamt erfährt das Rotorblatt 22 während des Betriebs demnach ausschließlich Druckbelastungen, so dass besonders schädliche Wechsellasten vermieden werden.

Im Rotorblatt 22 der Fig. 3 herrscht im Vergleich zu dem mittleren Luftdruck am Einsatzort der Windenergieanlage 10 Überdruck. Druckbelastungen insbesondere der Stege 30 des Rotorblattes 22 werden vermieden, wenn der Überdruck im Hohlraum 28 ausreichend groß gewählt ist. Durch den Überdruck und der damit einhergehenden Vorspannung des Rotorblattes 22 wirken auf die Stege 30 definierte Zugkräfte. Diese definierten Zugkräfte kompensieren oder überkompensieren die im Betrieb auftretenden, äußeren Druckkräfte, sodass das Rotorblatt 22 insgesamt nur Zugbelastungen erfährt. Schädliche Wechsellasten, d.h. Wechsel zwischen Zug- und Druckbelastungen, werden vermieden.

Im Weiteren wird die Windenergieanlage 10 der Figur 1 mit einem Rotorblatt 22 beschrieben, in dem entsprechend Fig. 3 Überdruck herrscht bzw. erzeugt wird.

Im Inneren der Gondel 16 ist dazu eine nicht dargestellte Druckluftquelle, nämlich ein Kompressor, angeordnet. Über nicht dargestellte Leitungen ist der Kompressor mit jedem Rotorblatt 22 verbunden. Dazu weist jedes Rotorblatt 22 im Bereich der Wurzel eine Einlass- und eine Auslassöffnung auf. Die jeweilige Einlassöffnung ist mit dem Kompressor über entsprechende Leitungen verbunden, die jeweilige Auslassöffnung ist über ein steuerbares Ventil und entsprechende Leitungen mit der Umgebungsluft verbunden.

Mithilfe des Kompressors kann jedes Rotorblatt 22 separat mit Druckluft befüllt werden, bis ein Überdruck vorliegt. Die Erzeugung von Überdruck in dem Rotorblatt 22 muss daher nicht bei Herstellung des Rotorblattes 22 erfolgen, sondem kann vorgenommen werden, wenn dieses bereits in die Windenergieanlage 10 integriert ist. Die über ein Ventil steuerbare Auslassöffnung ermöglicht es, einen Druckausgleich mit der Umgebungsluft zu schaffen, d.h., eine Druckemiedrigung. Im Ergebnis kann damit der Druck innerhalb des Rotorblattes 22 auf eine gewünschte Größe reduziert werden, wobei der unterste mögliche Wert dem Luftdruck der Umgebung entspricht.

Innerhalb des Rotorblattes 22 sind jeweils Sensoren angeordnet, die die Luftfeuchtigkeit, die Temperatur sowie den Druck innerhalb des Hohlraums 28 messen.

Sobald aufgrund von äußeren Temperaturschwankungen der gemessene Ist-Druck in dem Hohlraum 28 unter einen vorbestimmten Minimalwert fällt, wird mittels einer entsprechenden Regelungseinrichtung der Kompressor eingeschaltet und der Druck innerhalb des betreffenden Rotorblattes 22 bis zu einem vorbestimmten Soll-Wert erhöht. Sollte der Ist-Druck in dem Hohlraum 28 aufgrund hoher Außentemperaturen im Bereich der Windenergieanlage 10 über einen vorbestimmten Maximalwert ansteigen, kann das Auslassventil geöffnet werden, so dass aus dem Hohlraum 28 Druckluft austreten kann, bis eine Erniedrigung des Drucks auf den vorbestimmten Soll-Wert erfolgt ist.

Wenn der Feuchtigkeitssensor einen Ist-Wert misst, der oberhalb eines durch die Regelungseinrichtung vorgegebenen Soll-Wertes liegt, kann die Luft im Inneren des Rotorblattes 22 mittels des Kompressors und den Ein- und Auslassöffnungen durch trockenere Luft ersetzt werden.

Für die einzelnen Regelungsverfahren gibt es eine Vielzahl von Möglichkeiten, wie der Fachmann des Standes der Technik erkennt.

### Bezugszeichenliste:

- 10: Windenergieanlage
- 12: Untergrund
- 14: Turm
- 16: Gondel
- 18: Rotor
- 20: Nabe
- 22: Rotorblatt
- 24: Unterschale
- 26: Oberschale
- 28: Hohlraum
- 30: Steg

## Patentansprüche

1. Rotorblatt für eine Windenergieanlage, wobei das Rotorblatt als Hohlkörper ausgebildet ist mit einen Hohlraum begrenzender Oberschale und Unterschale, **gekennzeichnet durch** folgende Merkmale:
a) der Hohlraum (28) ist gasdicht abgeschlossen und mit Gas gefüllt ist, insbesondere Luft, dessen Druck größer oder kleiner ist als der an dem Einsatzort des Rotorblattes (22) zu erwartende, durchschnittliche Luftdruck,
b) **durch** die Gasfüllung des Hohlraums wird eine Wechsellasten entgegenwirkende Vorspannung des Rotorblattes erzeugt.

2. Rotorblatt gemäß Anspruch 1, **dadurch gekennzeichnet, dass** in einer oder mehreren den Hohlraum (28) begrenzenden Wandungen (24, 26) eine oder mehrere Ein-und/oder Auslassöffnungen angeordnet sind, über die das Gas von außen in den Hohlraum (28) einleitbar ist und/oder über die das Gas aus dem Hohlraum (28) nach außen leitbar ist.

3. Rotorblatt gemäß Anspruch 1 oder 2, **dadurch gekennzeichnet, dass** das Rotorblatt (22) Ventile aufweist, über die der Einlass und/oder Auslass des Gases in oder aus dem Hohlraum (28) steuerbar ist.

4. Rotorblatt gemäß einem oder mehreren der vorhergehenden Ansprüche, **dadurch gekennzeichnet, dass** die Einlass- und/oder Auslassöffnung im Bereich der Rotorblattwurzel angeordnet ist.

5. Rotorblatt gemäß einem oder mehreren der vorhergehenden Ansprüche, **dadurch gekennzeichnet, dass** das Rotorblatt (22) eine Unter- (24) und eine Oberschale (26) aufweist mit zwischen diesen verlaufenden Querstegen (30).

6. Rotorblatt gemäß einem oder mehreren der vorhergehenden Ansprüche, **dadurch gekennzeichnet, dass** das Rotorblatt (22) einen Drucksensor aufweist, mit dem der Druck innerhalb des Hohlraums (28) messbar ist.

7. Rotorblatt gemäß einem oder mehreren der vorhergehenden Ansprüche, **dadurch gekennzeichnet, dass** das Rotorblatt (22) einen Feuchtigkeitssensor aufweist, mit dem die Feuchtigkeit innerhalb des Hohlraums (28) messbar ist.

8. Rotorblatt gemäß einem oder mehreren der vorhergehenden Ansprüche, **dadurch gekennzeichnet, dass** das Rotorblatt (22) einen Temperatursensor aufweist, mit dem die Temperatur innerhalb des Hohlraums (28) messbar ist.

9. Windenergieanlage mit einem von Wind antreibbaren Rotor (18) mit zumindest einem Rotorblatt (22) gemäß einem oder mehreren der vorhergehenden Ansprüche, mit einem Generator zur Umwandlung der mechanischen Energie des Rotors (18) in elektrische Energie sowie mit einem Turm (14), an dem der Rotor (18) angeordnet.

10. Windenergieanlage gemäß Anspruch 9, **dadurch gekennzeichnet, dass** die Windenergieanlage (10) eine Druckquelle und/oder eine Unterdruckquelle aufweist, die über Leitungen mit dem Hohlraum (28) des Rotorblattes (22) verbunden ist.

11. Windenergieanlage gemäß Anspruch 9 oder 10, **dadurch gekennzeichnet, dass** die Windenergieanlage (10) eine Regelungseinrichtung aufweist, über die abhängig von dem ist-Druck und/oder der Ist-Feuchtigkeit und/oder der Ist-Temperatur des Gases innerhalb des Hohlraums (28) die Druckquelle und/oder die Unterdruckquelle regelbar ist.

12. Verfahren zum Betreiben einer Windenergieanlage mit einem von Wind antreibbaren Rotor (18) mit zumindest einem Rotorblatt (22) gemäß einem oder mehreren der vorhergehenden Ansprüche 1 - 8, mit einem Generator zur Umwandlung der mechanischen Energie des Rotors (18) in elektrische Energie sowie mit einem Turm (14), an dem der Rotor (18) angeordnet, wobei das Rotorblatt als Hohlkörper ausgebildet ist mit einen Hohlraum begrenzender Oberschale und Unterschale, wobei der der Hohlraum (28) gasdicht abgeschlossen ist und mit Gas gefüllt ist, insbesondere Luft, dessen Druck größer oder kleiner ist als der an dem Einsatzort des Rotorblattes (22) zu erwartende, durchschnittliche Luftdruck, wobei durch die Gasfüllung des Hohlraums eine Wechsellasten entgegenwirkende Vorspannung des Rotorblattes erzeugt ist, wobei der Ist-Druck des die Vorspannung erzeugenden, in dem Hohlraum befindlichen Gases und/oder dessen Ist-Feuchtigkeit und/oder dessen Ist-Temperatur gemessen wird, und wobei abhängig von dem Ist-Druck und/oder der Ist-Feuchtigkeit und/oder der Ist-Temperatur der Druck innerhalb des Hohlraums (28) erhöht oder erniedrigt wird und/oder das Gas innerhalb des Hohlraums (28) zumindest teilweise, vorzugsweise vollständig ausgetauscht wird.

## Claims

1. Rotor blade for a wind energy installation, with the rotor blade being configured as a hollow body with an upper shell and a lower shell which delimit a cavity, **characterized by** the following features:
(a) the cavity (28) is sealed to be gas-tight and is filled with gas, in particular air, whose pressure is greater than or less than the average air pressure to be expected at the point of use of the rotor blade (22),
(b) filling the cavity with gas generates a prestressing of the rotor blade which counteracts external forces acting thereon.

2. Rotor blade according to claim 1, **characterized in that** one or more inlet and/or outlet openings is or are arranged in one or more walls (24, 26) which bound the cavity (28), via which the gas can be introduced from the outside into the cavity (28), and/or via which the gas can be passed to the outside from the cavity (28).

3. Rotor blade according to claim 1 or 2, **characterized in that** the rotor blade (22) has valves via which the gas inlet and/or outlet into or from the cavity (28) can be controlled.

4. Rotor blade according to one or more of the preceding claims, **characterized in that** the inlet and/or outlet opening are/is arranged in the area of the rotor blade root.

5. Rotor blade according to one or more of the preceding claims, **characterized in that** the rotor blade (22) has a lower shell (24) and an upper shell (26) with lateral webs (30) running between them.

6. Rotor blade according to one or more of the preceding claims, **characterized in that** the rotor blade (22) has a pressure sensor, by means of which the pressure within the cavity (28) can be measured.

7. Rotor blade according to one or more of the preceding claims, **characterized in that** the rotor blade (22) has a humidity sensor, by means of which the humidity within the cavity (28) can be measured.

8. Rotor blade according to one or more of the preceding claims, **characterized in that** the rotor blade (22) has a temperature sensor, by means of which the temperature within the cavity (28) can be measured.

9. Wind energy installation having a rotor (18) which can be driven by wind and has at least one rotor blade (22) according to one or more of the preceding claims, having a generator for conversion of the mechanical energy of the rotor (18) to electrical energy, and having a tower (14) on which the rotor (18) is arranged.

10. Wind energy installation according to Claim 9, **characterized in that** the wind energy installation (10) has a pressure source and/or a vacuum-pressure source, which is connected via lines to the cavity (28) of the rotor blade (22).

11. Wind energy installation according to Claim 9 or 10, **characterized in that** the wind energy installation (10) has a closed-loop control device, via which the pressure source and/or the vacuum-pressure source can be controlled as a function of the actual pressure and/or the actual humidity and/or the actual temperature of the gas within the cavity (28).

12. Method for operation of a wind energy installation having a rotor (18) which can be driven by wind and has at least one rotor blade (22) according to one or more of the preceding claims 1-8, having a generator for conversion of the mechanical energy of the rotor (18) to electrical energy, and having a tower (14) on which the rotor (18) is arranged, wherein the rotor blade is configured as a hollow body with an upper shell and a lower shell which delimit a cavity, wherein the cavity (28) is sealed to be gas-tight and is filled with gas, in particular air, whose pressure is greater than or less than the average air pressure to be expected at the point of use of the rotor blade (22), wherein the filling of the cavity with gas generates a prestressing of the rotor blade which counteracts external forces acting thereon, wherein the actual pressure of the gas which generates the prestressing and which is located in the cavity, and/or its actual humidity and/or its actual temperature is/are measured, and wherein the pressure within the cavity (28) is increased or decreased and/or the gas within the cavity (28) is at least partially, but preferably completely, replaced as a function of the actual pressure and/or the actual humidity and/or the actual temperature.

## Revendications

1. Pale de rotor pour une éolienne, la pale de rotor étant réalisée sous forme de corps creux avec une coque supérieure et une coque inférieure délimitant une cavité, **caractérisée par** les caractéristiques suivantes :
a) la cavité (28) est fermée de manière étanche aux gaz et est remplie de gaz, en particulier d'air, dont la pression est supérieure ou inférieure à la pression d'air moyenne attendue au lieu d'utilisation de la pale de rotor (22),
b) le remplissage de gaz de la cavité provoque une précontrainte de la pale de rotor agissant à l'encontre de charges alternantes.

2. Pale de rotor selon la revendication 1, **caractérisée en ce que** dans une ou plusieurs parois (24, 26) délimitant la cavité (28) sont disposées une ou plusieurs ouvertures d'entrée et/ou de sortie, par le biais desquelles le gaz peut être introduit depuis l'extérieur dans la cavité (28) et/ou peut être guidé vers l'extérieur hors de la cavité (28).

3. Pale de rotor selon la revendication 1 ou 2, **caractérisée en ce que** la pale de rotor (22) présente des soupapes par le biais desquelles l'entrée et/ou la sortie du gaz dans ou hors de la cavité (28) peuvent être commandées.

4. Pale de rotor selon l'une quelconque ou plusieurs des revendications précédentes, **caractérisée en ce que** l'ouverture d'entrée et/ou de sortie est disposée dans la région de l'emplanture de la pale de rotor.

5. Pale de rotor selon l'une quelconque ou plusieurs des revendications précédentes, **caractérisée en ce que** la pale de rotor (22) présente une coque inférieure (24) et une coque supérieure (26) avec des nervures transversales (30) s'étendant entre elles.

6. Pale de rotor selon l'une quelconque ou plusieurs des revendications précédentes, **caractérisée en ce que** la pale de rotor (22) présente un capteur de pression avec lequel la pression à l'intérieur de la cavité (28) peut être mesurée.

7. Pale de rotor selon l'une quelconque ou plusieurs des revendications précédentes, **caractérisée en ce que** la pale de rotor (22) présente un capteur d'humidité avec lequel l'humidité à l'intérieur de la cavité (28) peut être mesurée.

8. Pale de rotor selon l'une quelconque ou plusieurs des revendications précédentes, **caractérisée en ce que** la pale de rotor (22) présente un capteur de température, avec lequel la température à l'intérieur de la cavité (28) peut être mesurée.

9. Éolienne comprenant un rotor (18) pouvant être entraîné par le vent avec au moins une pale de rotor (22) selon l'une quelconque ou plusieurs des revendications précédentes, comprenant un générateur pour convertir l'énergie mécanique du rotor (18) en énergie électrique ainsi qu'une tour (14) sur laquelle est disposé le rotor (18).

10. Éolienne selon la revendication 9, **caractérisée en ce que** l'éolienne (10) présente une source de pression et/ou une source de dépression, qui est connectée par le biais de conduites à la cavité (28) de la pale de rotor (22).

11. Éolienne selon la revendication 9 ou 10, **caractérisée en ce que** l'éolienne (10) présente un dispositif de régulation par le biais duquel, en fonction de la pression actuelle et/ou de l'humidité actuelle et/ou de la température actuelle du gaz à l'intérieur de la cavité (28), la source de pression et/ou la source de dépression peut être régulée.

12. Procédé de fonctionnement d'une éolienne comprenant un rotor (18) pouvant être entraîné par le vent avec au moins une pale de rotor (22) selon l'une quelconque ou plusieurs des revendications précédentes 1 à 8, comprenant un générateur pour convertir l'énergie mécanique du rotor (18) en énergie électrique ainsi qu'une tour (14) sur laquelle est disposé le rotor (18), la pale de rotor étant réalisée sous forme de corps creux avec une coque supérieure et une coque inférieure délimitant une cavité, laquelle cavité (28) est fermée de manière étanche aux gaz et est remplie de gaz, en particulier d'air, dont la pression est supérieure ou inférieure à la pression d'air moyenne attendue au lieu d'utilisation de la pale de rotor (22), une précontrainte de la pale de rotor agissant à l'encontre de charges alternantes étant produite par le remplissage de gaz de la cavité, la pression actuelle du gaz provoquant la précontrainte, se trouvant dans la cavité, et/ou son humidité actuelle et/ou sa température actuelle étant mesurées et, en fonction de la pression actuelle et/ou de l'humidité actuelle et/ou de la température actuelle, la pression à l'intérieur de la cavité (28) étant augmentée ou réduite et/ou le gaz à l'intérieur de la cavité (28) étant au moins en partie et de préférence complètement remplacé.
